# EUROPEAN PATENT APPLICATION

(11) **EP 2 784 336 A1**
(43) Date of publication of application: **01.10.2014**
(21) Application number: 12852355.2
(22) Date of filing: 22.11.2012
(51) Int. Cl.: F16B 12/42, A47B 96/00

(54) **DOUBLE ASSEMBLY SYSTEM THAT CAN BE USED FOR PIVOTING, ROTATING OR FOLDING OPERATIONS**

(30) Priority: 25.11.2011 ES 201101280 P
(71) Applicant: Francisco, Couceiro Nuñez, 15179 Oleiros A Coruña (ES)
(72) Inventor: Francisco, Couceiro Nuñez, 15179 Oleiros A Coruña (ES)
(74) Representative: Álvarez Flores, Alberto
(86) International application number: PCT/ES2012/070818
(87) International publication number: WO 2013/076340

(57) **Abstract**

The present invention is about an assembly system for its use in the manufacturing of furniture and other constructive elements and structures, for its possible folding and unfolding, or closing and opening, and fixation of a part in its position of use based on its spatial orientation.

The double assembly system has a group of elements (1), the first group of elements (1) which intersect with another group, and united (Fig. 1.c) they allow a rotational movement (see Fig. 1.d) of a defined and specific angle (ß) of a group of elements (Fig. 1.a) over another (see Fig 1.b) allowing for the union of parts (1f, 1g, 2f, 2g) (see Fig. 2), generally flat ones, so that one of the mentioned parts can pivot, rotate or fold over another according to the aforementioned angle, and stabilize the mentioned part in its final position.

## Description

### OBJECT OF THE INVENTION

The present invention is about an assembly system for its use in the manufacturing of furniture and other constructive elements and structures, for its possible folding and unfolding, or closing and opening, and fixation of a part in its position of use based on its spatial orientation.

### BACKGROUND OF THE INVENTION

There exist other forms of assembling parts, but none of them is similar to what is described here because this one has four points of support by an element, with which the stabilization of forces that are exerted is greater.

In the invention technique, the patent ES-2320307 is known, in which a framework of customizable table boards of different sizes is described with a structure formed by a plurality of crossbeams supported by a plurality of support legs on which the tabletop is mounted. The first and second crossbeams are joined together in an intermediate intersection point comprising a joint which allows rotation of the first and the second bolsters relative to the point of intersection according to a horizontal spinning plan parallel to the surface of the board. The mentioned frame can adopt a selectable position between a closed position in which the first and the second crossbeams are disposed in parallel position, and an open position in which the first and the second crossbeams are arranged crosswise. The joint or assembly described by this patent requires a physical, structural element acting as physical axis for rotation. The crossbeams described in this patent may be arranged in form of a cross forming an angle of between 0 and 90 ° between them sustaining a table top. However, when the rotation angle is less than 90 °, the crossbeams which are connected to the joint that lets them rotate, are not supported by any structural element, which would not allow them withstand forces in parallel with the tabletop plane when the rotated angle is less than 90°. Therefore, the joint described in this patent has considerable limitations in use, limiting its use to the restraint of elements that exert forces perpendicular to the plane formed by the mentioned crossbeams, as in the case of supporting a tabletop. Hence, it is a joint that is not stabilized at intermediate positions of the rotation angle. This invention also fails to describe a joint that allows for the use of multiple levels or planes of pairs of crossbeams, only two levels of crossbeams, so that the points of abutment with the joint in its fully extended position are limited to two sides.

A joint with similar limitations to that described above can be found in the Japanese Utility Model JP54075201.

The German patent document DE-10014421-A1 describes an adjustable sustaining frame of a tabletop with three or more pairs of horizontal crossbeams that share a central joint that blocks them in their position of use. The mentioned joint requires a central lock. While this German document describes a joint or assembly with three planes of pairs of crossbeams for supporting a table top, these crossbeams do not abut in intermediate opening positions, and thus have limited use depending on the requirements of stability.

Thus, joints are needed which will provide increased stability with a higher number of support points to enable its use with high efficiency and robustness in rotation angles of its elements greater or less than 90°, and which will not necessarily require the use of structural elements which would act as axes of rotation. In this way, it would be possible to use the joint vertically and horizontally, and subjected to considerable forces at various levels.

### DESCRIPTION OF THE INVENTION

The present invention is about an assembly system for manufacturing of furniture and other constructive elements, for its folding and unfolding, or opening and closing, and fixation of a part in its position of use according to its spatial orientation.

Double assembly system consisting of a group of elements that intersects with another and, together, allows for a rotational movement of a definite and concrete angle of a group of elements of the other angle, allows the union of parts, generally flat ones, so that one of the mentioned parts can pivot, rotate or fold over another according to the mentioned angle, and stabilize the mentioned part in its final position.

An assembly moves relative to the other on a defined rotation axis, or longitudinal axis of assembly, that can optionally incorporate pins and their corresponding accommodations depending on the design and precise resistance and utility use of the component to which they will belong to. In the case of not carrying a pin or hinge on its axis, the movement of an assembly and the parts united with it with respect to the other, in practice, is not defined with respect to the mentioned axis. If necessary, you mechanisms can be added that will direct the mentioned movement.

The rotational range, in most cases, is from 0 to 90 ° because usually the straight angle is the most widely used in the manufacture of any parts or constructive elements. However, you can set greater or smaller angles for the final stabilization of one part over another.

The anchoring system will be defined according to the material of the given parts, their thickness, design, and use.

Regarding the number of constituent elements of each assembly: the basic system consists of an element (in an assembly) that binds to a group of two elements (from the other assembly) and being able to successively incorporate the elements necessary for each case.

Each element or group of elements can carry a coupled part in each of its ends, in only one of them or in none.

In position to stabilize, i.e. in the maximum angle, the faces of the elements that can make contact can actually make contact all or not, depending on the strength of the material and the use or usefulness of the parts which they form part of.

The dimensions and proportions of the elements of the system may vary depending on the design and chosen material and the required resistance according to the use or usefulness of the parts of which they form part of.

Generally, the facing elements are symmetrical. The geometric section of each element may vary on either side of the rotation axis, as shown by way of example, in the figures accompanying the description, in any case, it must be integral and have the necessary stiffness, either on its own geometric shape, or by the union of parts which reach to it.

Likewise, opposing parts may have different thicknesses so that the geometric sections of the facing elements are different, asymmetrical.

### BRIEF DESCRIPTION OF THE DRAWINGS

- Figure 1: Perspective view: the first assembly (Figure 1a) formed by a group of elements, the second assembly (Figure 1b) formed by another group of elements, resulting in a double angle assembly of minimal movement (in Figure 1.c), and a double angle assembly of maximum movement (in Figure 1.d).
- Figure 2: View of the assembly system applied to vertical parts), in Figure 2.a two intertwined elements in the closed position are observed, and in Figure 2.b they are in open position.
- Figure 3: Overview of the system applied to parts in horizontal position, in Figure 3.a two intertwined elements in closed position are observed, and Figure 3.b they are in the open position.
- Figure 4: View of different possibilities as to the fact that each element or group of elements or assembly can carry coupled a piece in each of its ends (Fig. 4a), in only one of them (1° assembly of Fig. 4b), c), d), 2nd assembly of Fig 4c)) or in none of them (2° assembly of Fig. 4.d)).
- Figure 5: Perspective view of the basic system formed by an element that links to a group of two elements (Fig.5.a) and can successively incorporate the elements necessary for each case (Fig.5.b).
- Figure 6: View of the top floor of several examples of the system, depending on their geometric form.

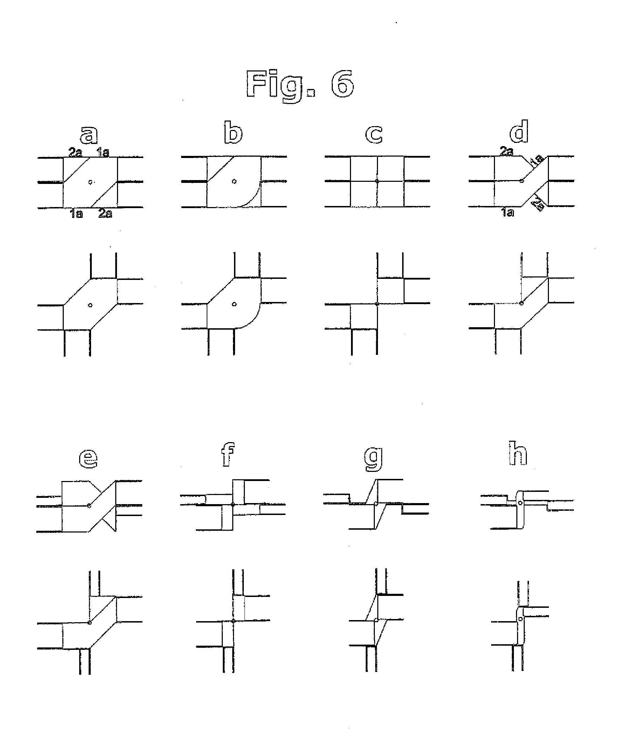

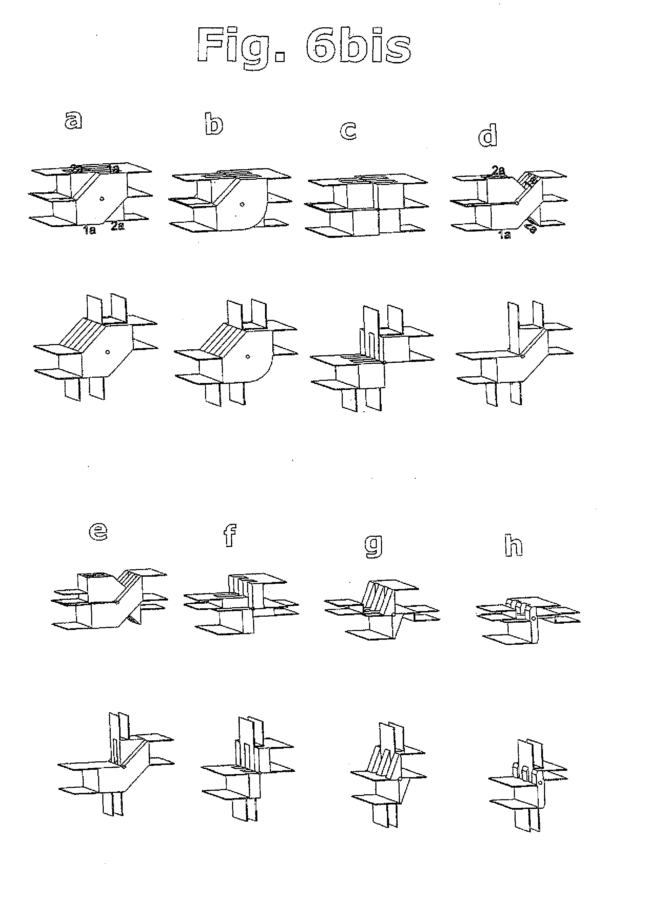

- Figure 6bis: Same as the previous one but in perspective.

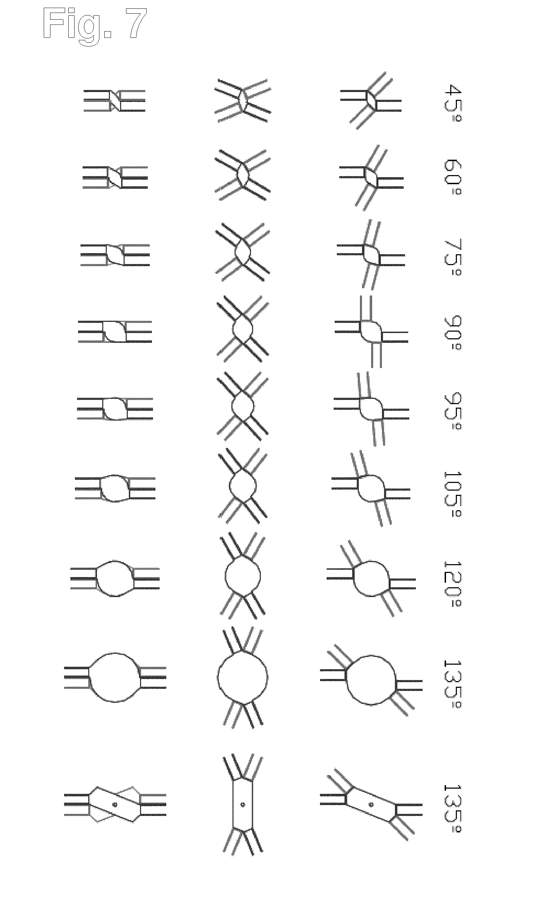

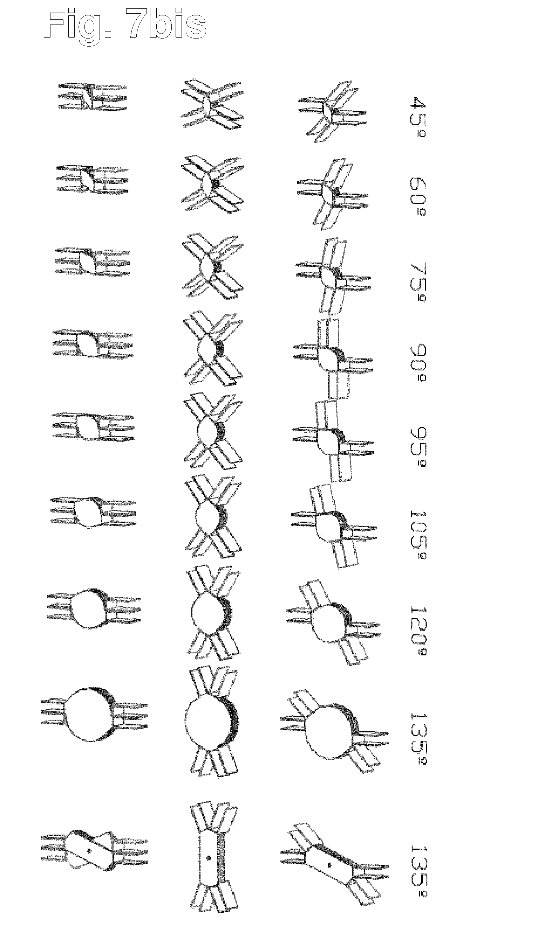

- Figure 7: View from the top of several examples of assembly system with the range of rotation angles greater or less than 90 °.
- Figure 7bis: Same as the previous one but in perspective.

### PREFERRED EMBODIMENT OF THE INVENTION

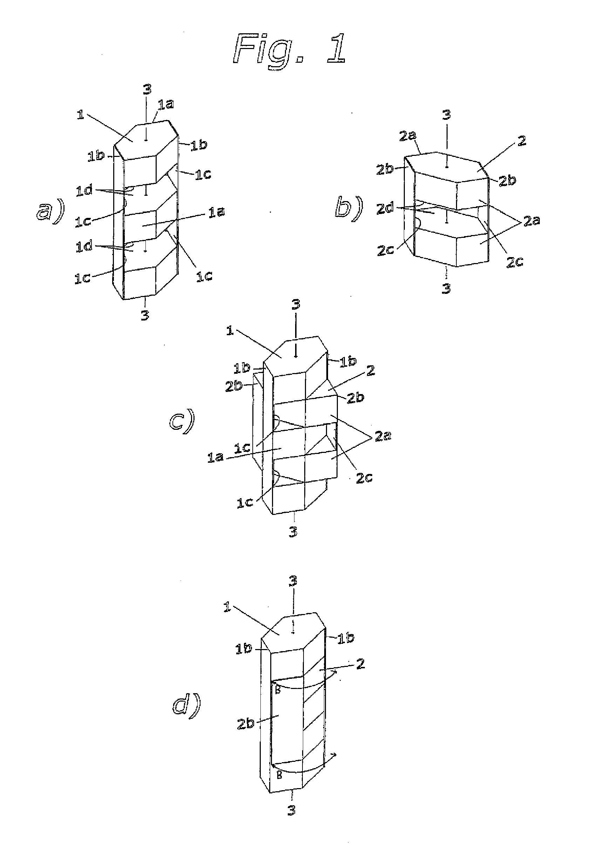

To facilitate the reading and understanding of the description, constituent elements and references of the assemblies represented in the drawings or figures are listed in continuation:
- Rotational angle or rotation interval (β).
- The first assembly represented in Figure 1.a), and the second assembly represented in Figure 1.b).
- Elements (1) of the first assembly and elements (2) of the second assembly.
- Parts (1f,1g,2f,2g).
- Angle of rotation or rotation interval (3).
- External faces (1a,2a) of the elements (1,2).
- Connecting parts (1b,2b) of the elements (1,2).
- Inner face (1c,2c) of connecting parts (1b,2b).
- Inner face (1d,2d) of the elements (1,2).
- Anchor pieces (1e,2e).

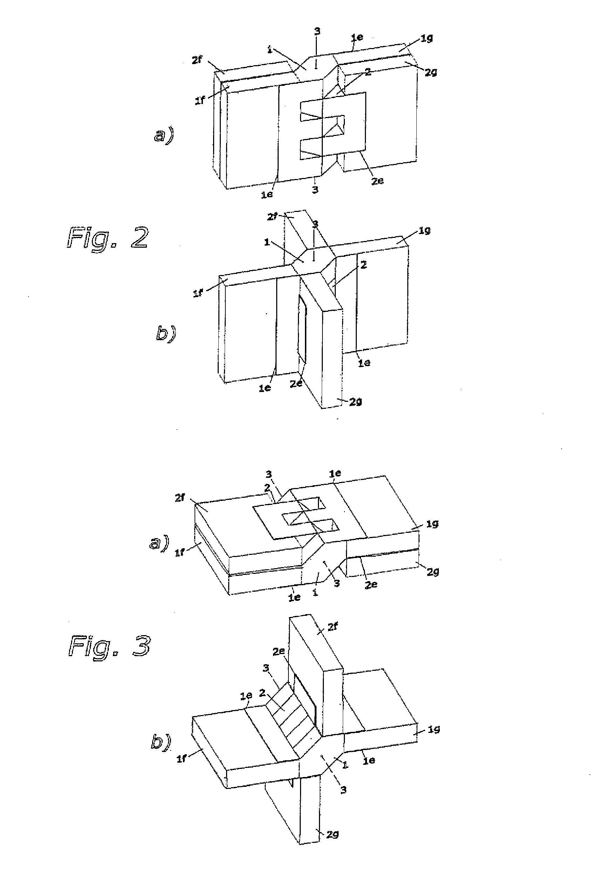

In Figure 1 a double assemblage system is observed consisting of a group of elements (1,2), the first group of elements (1) of a first assemblage is represented in Figure 1.a), and a second group of elements (2) of the second assemblage is represented in Figure 1.b), which intersect (see Fig. 1 and 2), and united (Fig. 1.c) they allow a rotational movement (see Fig. 1.d) of a defined and specific angle (ß) of a group of elements (Fig. 1.a) over another (see Fig 1.b) allowing for the union of parts (1f, 1g, 2f, 2g) (see Fig. 2), generally flat ones, so that one of the mentioned parts can pivot, rotate or fold over another according to the aforementioned angle, and stabilize the mentioned part in its final position (see figures 2 and 3).

Hence, each assembly (Fig.1.a y Fig. 1.b) essentially comprises some elements (1,2) and connecting pieces (1b, 2b) of the mentioned elements (1,2) inwardly, and, as defined previously, some parts (1f, 1g, 2f, 2g) (see Fig. 2). These connecting parts (1b, 2b) of the elements (1,2), at least of one assembly, are on each side of the longitudinal axis (3) of the assembly or rotational axis. As shown in Figures 1.d) and 2b) and 3b), the angle (ß) of maximum movement is achieved because each element (1) of a group has two faces (1a), one on each side of the axis of rotation (3), which contact the connecting parts (2b) of the other group (see Fig 1.d) on its inner face (2c); and, in turn, each element (2) of this group has two outer faces (2a), one on each side of the axis of rotation, which contact the connecting parts (1b) of the previous group in the internal face (1c). Thus, in that position (Fig. 1.d and Fig. 2.b and 3.b), the system stabilizes the parts (1f, 1g, 2f, 2g) which it connects.

Depending on the resistance of the material used in the manufacture of the system and application or use of the connecting materials which they form part of, all the external faces (1a, 2a) that can make contact can actually make effective contact or distribute the actions or efforts that are exerted on some of them.

An assembly moves relative to the other on a definite axis of rotation (3) that can carry pins (not shown) and the accommodation of these or not, depending on the design and precise resistance and the use or application of the part/s which they will form part of. Thus, the system allows the non-use of a physical axis, by setting the cross-linked assemblies together. Figure 6 shows that in the case of not carrying pin or bolt on the axis (3), in some designs (Fig. 6), the movement of an assembly and the part/s (1f, 1g, 2f , 2g) attached to it with respect to the other, in practice, is not defined with respect to said axis (3). This is solved by giving a cylindrical form as the design or constructive solution of Figure 6b), or those shown in Figures 7 and 7bis, or, as indicated, mechanisms can be added to direct said movement (not shown).

In Figures 2 to 4, it is observed that the system is valid for use in any spatial position, producing different forces and loads. Vertically (Fig. 2), higher loads will occur in the inner faces (1d, 2d) of the elements (1.2); and in horizontal position (Fig. 3), on the outer faces (1a, 2a) of the elements (1.2) of the assemblies and the inner faces (1c, 2c) of their connecting parts (1b, 2b).

In the same figures 2-4, it is observed that the system is supplemented with the pieces of anchor (1e, 2e) of the connecting materials or parts (1f, 1g, 2f, 2g), the design of which will depend on these and on their thickness and use.

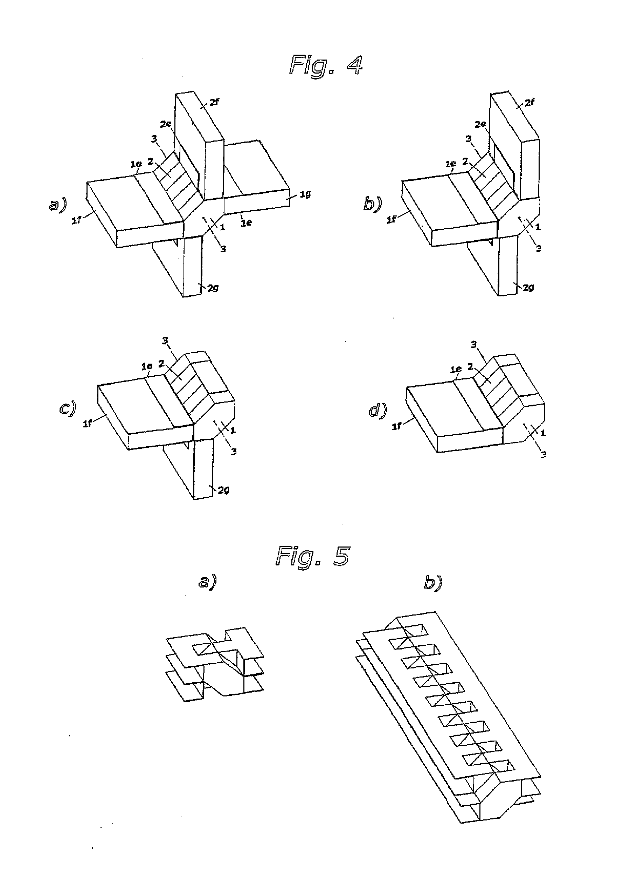

The interval of rotation (β), in most instances, is from 0 to 90 ° (see Figure 4) because generally the straight angle is the most widely used in the manufacture of any part or constructive element. However, as shown in Figures 7 and 7bis, smaller or greater angles can be defined for the final stabilization of a part over another group, varying in a group the angles of the contact faces with those of another group, or in both, or in the design of one of the anchoring parts. Figure 4 shows that each element (1,2) or group of elements or assembly can be coupled out with a piece (1f, 1g, 2f, 2g) on each of its ends (see Figure 4a) on only one of them (see Figure 4c)) or on none.

All parts of each assembly, that is, elements (1, 2), connecting parts (1b, 2b) of the elements (1, 2) and anchoring pieces (1e, 2e) may be independent (see Figure 2 and 3), forming part of each other or forming one piece. In turn, each part can be divided into other parts and/or materials. Also, the materials to be joined can be an integral part of the assembly.

To link an assembly with another to form the system, at least it will be needed that a connecting piece (1b, 2b) of the elements of the assemblies (1,2) is removable during assembly.

Despite the previous paragraph, the double assembly system can be constructed with components that form one single piece.

The basic assembly system is formed by a set of two elements (1) in the first assembly connected to an assembly consisting of a single element (2) (Fig. 5.a), with each assembly being able to incorporate more elements than would be needed for each case (see Figure 5.b or Figures 1-4).

Specifically, in Figure 5.a, a configuration is observed in which second assembly comprises a single element (2), and each of the connecting parts (2b) of the element (2) of the second assembly comprises two inner faces (2c), and a pair of outer faces (1a) of the first assembly are in contact with the internal faces (2c) of the connecting pieces (2b) of the second assembly. In this configuration, the two connecting parts (2b) of the element (2) do not link two elements (2) and only act through their inner faces (2c), as contact elements with the two elements (1) of the first assembly.

The dimensions and proportions of the elements of the system may vary depending on their design and chosen material and the required resistance according to the use or application of the parts which they are part of.

Generally the elements (1,2) of opposing assemblies are symmetrical (see Figures 1 to 5), but not necessarily. The geometry of each element (1,2) of the assembly can be varied to each side of the axis of rotation (3), as shown by way of non-limiting and schematic examples, in Figure 6. Each element (1.2) of the assemblies can be formed by any geometrical shape, regular or irregular, or a composition of them. In any case, it should be supportive and have the necessary rigidity, either by its own geometric shape, or by the union of parts which reach to it.

Thus, the outer faces which contact (1a, 2a) the elements (1,2) of the assemblies can be flat and at straight angles (Fig. 6.a), b), c), f), g), h), inclined (Fig. 6.d, e), curves and/or irregular; The internal faces (represented vertically) (1c, 2c) are geometrically tailored for perfect contact.

The materials to be joined may have different thicknesses of a group or assembly of the system with respect to the other (Figures 6.e), f), g), just the anchorage parts varying (Fig. 6.e) or also the geometry of the elements of the assemblies (1,2) (see Figures 6.f), g); the thickness of the joined materials by the same assembly can also vary (Fig. 6.h). Therefore, the geometric sections of the elements may be different and asymmetric.

The different parts will be made depending on their materials, in any case one of the joints must be removable in its assembly.

## Claims

1. A double assembly system for pivoting, rotating or folding of the kind that comprises at least a first assembly and a second assembly intersected with a rotational movement, around a longitudinal axis (3), of a defined rotational angle (β) of the second assembly relative to the first one,
**characterized by**:
- The first assembly comprises:
o at least two elements (1), each of said elements (1) presenting two outer faces (1a) which leave in between the mentioned longitudinal axis (3), and
o two connecting parts (1b) of said elements (1), each connecting part (1b) placed in a different side of the longitudinal axis (3), each of said connecting parts (1b) having at least an inner face (1c) between two consecutive elements (1) row, and each of said connecting parts (1b) joined on its external face to a part (1f, 1g);
- and, the second assembly comprises:
∘ at least one element (2), each of said elements (2) having two external faces (2a) which leave in between the longitudinal axis (3) of said assembly, and
o two connecting parts (2b) of said elements (2), each of them on a different side of the longitudinal axis (3), and each of the mentioned connecting parts (2b) connected to a part (2f, 2g),
and **by that,** in the position of the maximum rotational angle (β), at least a pair of the said outer faces (2a) of the second assembly are in contact with the inner faces (1c) of the connecting parts (1b) of the first assembly.

2. A double assembly system according to claim 1, **characterized in that** the second assembly comprises only one element (2), and each of the connecting parts (2b) of the element (2) of second assembly comprises at least one inner face (2c), and **in that**, in the position of the maximum rotational angle (β), at least a pair of outer faces (1a) of the first assembly are in contact with the inner faces (2c) of the connecting parts (2b) of the second assembly.

3. A double assembly system according to claim 1, **characterized in that** the second assembly comprises at least two elements (2), each of the connecting parts (2b) comprising at least an inner face (2c) between two consecutive elements (2) of the second assembly, and **in that** the position of a maximal rotational angle (β), at least a pair of the outer faces (1a) of the first assembly are in contact with inner faces (2c) of the connecting parts (2b) of the second assembly.

4. A double assembly system according to any of the previous claims, **characterized in that** said longitudinal axis (3) is defined by a pin.

5. A double assembly system according to any of the previous claims, **characterized in that** said parts (1f, 1g, 2f, 2g) connect to the assemblies through anchorage pieces (1e,2e).

6. A double assembly system according to any of the previous claims, **characterized in that** said parts (1f, 1g, 2f, 2g) are elongated.

7. A double assembly system according to any of the previous claims, **characterized in that** said parts (1f, 1g, 2f, 2g) are flat.

8. A double assembly system according to any of the previous claims, **characterized in that** the components of each assembly are independent.

9. A double assembly system according to any of the previous claims, **characterized in that** all or some of the components of each assembly form a single piece.

10. A double assembly system according to any of the previous claims, **characterized in that** all or some of the components of each assembly and materials or pieces to be assembled form a single piece.
